Europäisches Patentamt

**European Patent Office**

Office européen des brevets

(19)

(11) Numéro de publication : **0 181 982**
**B1**

(12) **FASCICULE DE BREVET EUROPÉEN**

(45) Date de publication du fascicule du brevet :
**27.07.88**

(51) Int. Cl.⁴ : **F 02 K   9/34**

(21) Numéro de dépôt : **84402351.5**

(22) Date de dépôt : **19.11.84**

---

(54) **Procédé de préparation de corps de propulseurs fusées.**

---

(43) Date de publication de la demande :
**28.05.86 Bulletin 86/22**

(45) Mention de la délivrance du brevet :
**27.07.88 Bulletin 88/30**

(84) Etats contractants désignés :
**DE GB IT SE**

(56) Documents cités :
**EP-A- 0 034 850**
**FR-A- 2 303 843**
**US-A- 3 010 354**

(73) Titulaire : **SOCIETE EUROPEENNE DE PROPULSION
(S.E.P.) S.A.**
**24, rue Salomon de Rothschild**
**F-92150 Suresnes (FR)**

(72) Inventeur : **Sauvage, Dominique**
**36, Domaine Hontane**
**F-33320 La Taillan Medoc (FR)**

(74) Mandataire : **Portal, Gérard et al**
**Cabinet Beau de Loménie 55, rue d'Amsterdam**
**F-75008 Paris (FR)**

EP 0 181 982 B1

---

# 0 181 982

## Description

Dans la demande de brevet français 7 508 315 déposée le 12 Mars 1975 et publiée sous le numéro 2 303 843 on a décrit un procédé de collage à froid d'un matériau synthétique ou naturel (caoutchouc) sur un support consistant à déposer sur le matériau à coller une couche mince d'un agent adhésif (ou primaire), à cuire le composant constitué par ledit matériau revêtu dudit primaire, puis à coller l'ensemble obtenu sur ledit support au moyen d'une colle appropriée.

Il a été trouvé et c'est là l'objet de la présente invention que la technique de collage à froid décrite dans ladite demande de brevet était spécialement utilisable pour la préparation de corps de propulseur fusée constitué d'une enceinte, contenant le mélange solide combustible-comburant (progergol), en caoutchouc vulcanisé autour de laquelle on dispose d'une paroi extérieure en une résine renforcée.

Selon l'invention, on fournit un procédé de préparation d'un corps de propulseur fusée comportant une paroi en caoutchouc formant une enceinte qui contient un progergol et une paroi extérieure formant renforcement caractérisé en ce que l'on réalise successivement les opérations suivantes :

— enduction de la surface extérieure de l'enceinte en caoutchouc par un agent adhésif,

— cuisson de l'ensemble formé par l'enceinte munie d'une couche d'agent adhésif à une température supérieure à environ 100 °C,

— mise en place du propergol dans l'enceinte,

— réalisation de la paroi extérieure par bobinage autour de l'enceinte de fibres imprégnées de résine polymérisable et cuisson de l'ensemble à une température inférieure à environ 100 °C, suffisante pour polymériser ladite résine.

Par caoutchouc utilisable pour réaliser l'enceinte selon la présente invention, on entend n'importe quel caoutchouc naturel ou synthétique dont les propriétés, à l'état vulcanisé, sont compatibles avec la fonction jouée par ladite enceinte. Mais bien évidemment, l'invention s'applique essentiellement aux enceintes réalisées avec des caoutchoucs qui sont difficiles à coller tels que les copolymères éthylène-propylène les copolymères éthylène-propylène-diène (EPDM), les caoutchoucs butyls (IIR) et les polyéthylènes chloro sulfonés (CSM).

Le caoutchouc est donc muni sur sa face extérieure d'un agent adhésif connu par les spécialistes sous la dénomination de primaire. Un tel primaire est constitué par des résines spéciales ou des mélanges de résines contenant des charges et éventuellement d'autres additifs. Un tel primaire se présente généralement sous la forme d'une solution ou dispersion des ingrédients, dans un solvant (plus généralement dans un milieu) liquide.

Le caoutchouc doit être vulcanisé et le primaire doit être cuit pour former une « enceinte revêtue » utilisable. Ces deux opérations peuvent être réalisées simultanément ou successivement. On notera que le primaire doit être cuit à une température supérieure à environ 100 °C (le plus souvent entre 120 et 130 °C).

L'enceinte revêtue de primaire ainsi obtenue est alors refroidie, puis on y coule le propergol ; l'enceinte est ensuite revêtue de la résine renforcée.

On appelle « résine renforcée » une résine polymère comportant des éléments de renforcement ; ces éléments sont le plus souvent des fibres (fibres de verre, fibres de polyamides aromatiques ou non, fibres de carbone...). Le plus souvent on utilisera des fibres préimprégnées. Mais en outre, les résines utilisables doivent être choisies parmi les prépolymères qui sont aptes, généralement grâce à l'utilisation d'un catalyseur ou « durcisseur » convenable, à se polymériser à une température inférieure à environ 100 °C, cette température étant choisie pour tenir compte du fait que le propergol, présent lors de ce chauffage, ne supporterait pas, sans danger, une température supérieure. De plus, la résine doit être utilisée sur l'agent adhésif cuit.

Cette température de polymérisation peut être la température ambiante. On notera que cette température de polymérisation de la résine est nettement inférieure à celle qui est nécessaire pour vulcaniser le caoutchouc et à celle qui est nécessaire pour cuire le primaire et c'est pourquoi il convient que ces deux opérations (vulcanisation et cuisson) soient effectuées avant la pose de la résine renforcée.

L'exemple limitatif ci-après illustre l'invention :

— on utilise une enceinte en EPDM (caoutchouc éthylène-polymère-diène) vulcanisé ; on dépose sur la face extérieure de cette enceinte une couche d'environ 20 microns d'un primaire commercialisé sous le nom de CHEMOSIL X 6070 ; l'ensemble est cuit à 120 °C pendant environ 1 heure.

— sur cette enceinte revêtue de primaire cuit (et dans laquelle on a introduit un propergol) on bobine des fibres de Kevlar imprégnées de résines R ; puis l'ensemble est cuit à une température T.

On donne dans le tableau ci-après les divers essais réalisés (avec succès)

(Voir Tableau page 3)

2

| Résine | | Température et durée de cuisson |
|---|---|---|
| CIBA : (XB 3052 A (époxy novolaque) | 60 parties en poids | 23'C - 7 jours |
| XB 3052 B (durcisseur amine) | 40 parties en poids | |
| DOW DER 351 (époxy) | 100 parties en poids | 40°C - 4 heures |
| JEFFERSON Jeffamine D 230 | 37 parties en poids | |
| accélérateur A 398 | 2 parties en poids | |
| CDF Lopox 200 (époxy ) | 100 parties en poids | 60°C - 24 heures |
| durcisseur. D 302 | 27 parties en poids | |
| CIBA Résine LY 556 époxy 100 en poids | | 80°C - 24 heures |
| durcisseur HY 906 90 | " | |
| accélérateur DY070 1,5 | " | |

Dans tous les cas, on a obtenu une très bonne adhérence de la couche extérieure (résine renforcée) sur l'enceinte. L'absence de primaire ou l'utilisation d'un primaire non cuit à l'avance, donnerait une adhérence faible et insuffisante.

**Revendications**

1. Procédé de préparation d'un corps de propulseur fusée comportant une paroi en caoutchouc formant une enceinte qui contient un propergol et une paroi extérieure formant renforcement caractérisé en ce que l'on réalise successivement les opérations suivantes :
— enduction de la surface extérieure de l'enceinte en caoutchouc par un agent adhésif,
— cuisson de l'ensemble formé par l'enceinte munie d'une couche d'agent adhésif à une température supérieure à environ 100 °C,
— mise en place du propergol dans l'enceinte,
— réalisation de la paroi extérieure par bobinage autour de l'enceinte de fibres imprégnées de résine polymérisable et cuisson de l'ensemble à une température inférieure à environ 100 °C, suffisante pour polymériser ladite résine.
2. Procédé selon la revendication 1, caractérisé en ce que l'agent adhésif est choisi pour sa compatiblité avec le caoutchouc utilisé et que la résine de bobinage est choisie pour sa propriété de coller à l'agent adhésif cuit.

**Claims**

1. Method for preparing a propellant casing for rocket motor of the type comprising a rubber wall forming an enclosure containing a propellant and an outer wall forming reinforcement, characterized in that it consists in the following successive operations :
— coating of the outer surface of the rubber enclosure with an adhesive agent,
— baking of the assembly formed by the enclosure and its coating of adhesive agent at a temperature higher than about 100 °C,

— positioning of the propellant inside the enclosure,
— production of the outer wall by the winding of polymerisable resin-impregnated fibers around the enclosure, and baking of the whole assembly at a temperature lower than about 100 °C, sufficient to polymerize said resin.

2. Method according to claim 1, characterized in that the adhesive agent is selected to be compatible with the rubber used and in that the winding resin is selected for its ability to adhere to the baked adhesive agent.

**Patentansprüche**

1. Verfahren zur Herstellung eines Triebwerkzellkörpers mit einer Wand aus Kautschuk, die eine ein Propergol enthaltende Hülle bildet, und einer eine Verstärkung bildenden Außenwand, gekennzeichnet durch folgende aufeinanderfolgende Stufen :
— Aufbringen eines Klebstoffs auf die Außenfläche der Hülle aus Kautschuk,
— Härten der durch die Hülle gebildeten Konstruktion mit der darauf aufgebrachten Klebstoffschicht bei einer Temperatur über etwa 100 °C,
— Einbringen des Propergols in die Hülle,
— Herstellen der Außenwand durch Umwickeln der Hülle mit mit polymerisierbarem Harz imprägnierten Fasern und Härten der Konstruktion bei einer für die Polymerisation des Harzes ausreichenden Temperatur unter etwa 100 °C.

2. Verfahren nach Anspruch, 1, dadurch gekennzeichnet, daß der Klebstoff anhand seiner Verträglichkeit mit dem verwendeten Kautschuk und das Harz für die Umwicklung anhand seiner Klebfähigkeit mit dem gehärteten Klebstoff ausgewählt werden.